(19) Europäisches Patentamt
European Patent Office
Office européen des brevets

(11) **EP 0 942 297 B1**

(12) **EUROPEAN PATENT SPECIFICATION**

(45) Date of publication and mention
of the grant of the patent:
**09.11.2016  Bulletin 2016/45**

(51) Int Cl.:
*G02B 1/02* *(2006.01)*    *G02B 13/14* *(2006.01)*
*G02B 5/30* *(2006.01)*

(21) Application number: **99104916.4**

(22) Date of filing: **11.03.1999**

(54) **Method of manufacturing a fluoride crystal optical element**

Verfahren zur Herstellung eines optischen Elements aus Fluoridkristall

Procédé de fabrication d'un élément de cristal de fluorure

(84) Designated Contracting States:
**DE FR GB NL**

(30) Priority: **12.03.1998  JP 6177998**
**09.04.1998  JP 9797398**

(43) Date of publication of application:
**15.09.1999  Bulletin 1999/37**

(60) Divisional application:
**02011290.0 / 1 271 185**

(73) Proprietor: **Nikon Corporation**
**Tokyo 108-6290 (JP)**

(72) Inventors:
• **Sakuma, Shigeru**
**c/o Nikon Corporation**
**Tokyo (JP)**
• **Takano, Shuuichi**
**c/o Nikon Corporation**
**Tokyo (JP)**

(74) Representative: **Viering, Jentschura & Partner mbB**
**Patent- und Rechtsanwälte**
**Am Brauhaus 8**
**01099 Dresden (DE)**

(56) References cited:
**US-A- 5 031 977**

• **OLDHAM W G ET AL: "193-NM LITHOGRAPHIC SYSTEM LIFETIMES AS LIMITED BY UV COMPACTION" SOLID STATE TECHNOLOGY, COWAN PUBL.CORP. WASHINGTON, US, vol. 40, no. 4, 1 April 1997 (1997-04-01), pages 95-96,98,100,1, XP000686899 ISSN: 0038-111X**
• **CARDONA M ET AL: "Ellipsometric investigations of piezo-optical effects" THIN SOLID FILMS, ELSEVIER-SEQUOIA S.A. LAUSANNE, CH, vol. 313-314, 13 February 1998 (1998-02-13), pages 10-17, XP004132951 ISSN: 0040-6090**
• **M. BORN AND E. WOLF: "Principles of Optics, 6th edition, pages 703-705" , PERGAMON PRESS , NEW YORK XP002178786 * the whole document ***

EP 0 942 297 B1

## Description

## BACKGROUND OF THE INVENTION

Fiend of the Invention

The present invention is directed to an optical element, the method of making the optical element, an optical system using the optical element for an optical apparatus (e. g., a camera, microscope, telescope or photolithographic apparatus such as a stepper, etc.), and a method for calculating the birefringence of the optical element,

Description of the Related Art

Calcium fluoride, strontium fluoride and barium fluoride, which are fluoride crystals (single crystals) used as optical element materials, have a low refractive index compared to ordinary optical glass, and also show little dispersion (wavelength dependence of the refractive index), accordingly, such materials are useful for color aberration correction in optical systems.

In particular, calcium fluoride is easy to obtain, and can be obtained even as large-caliber single crystals with a diameter of $\phi$ 150 mm or greater.

Such fluoride crystals (single crystals) belong to the cubic crystal type, and are optically isotropic bodies. These materials are suitable as materials for optical elements such as lenses, etc. Fluoride crystals have long been widely used as materials of camera lenses, microscope lenses and telescope lenses, etc.

Birefringence is a phenomenon in which the refractive index varies according to the direction of polarization of the light or other electromagnetic waves. Ordinarily, this is expressed as the light path difference (called "retardation") that occurs when the light passes through a unit length of the substance in question, and is given in units of nm/cm.

Furthermore, as another method of expressing birefringence, this phenomenon is also sometimes expressed as the difference (n1-n2) between the refractive index n1 with respect to light having a certain direction of polarization and the refractive index n2 for light with a direction of polarization that is perpendicular to the above-mentioned direction of polarization.

Furthermore, the refractive index n0 in a state in which no external force is acting on the substance in question is affected by external forces so that the refractive index changes. In cases where this change is dependent on the direction of polarization, the amounts of change in the refractive index are expressed as $\Delta$n1 and $\Delta$n2, and the difference between these amounts of change, i. e., ($\Delta$n1-$\Delta$n2), is also sometimes called "birefringence".

In cases where birefringence is caused by strain, this birefringence is also commonly called "strain'. Moreover, crystals with cubic crystal systems inherently lack birefringence, but may have birefringence as a result of the effects of electromagnetic fields and stress.

Specifically, in the case of the above-mentioned fluoride crystals (single crystals), birefringence is generated as a result of the effects of stress. For example, considerable birefringence is present in currently manufactured fluoride crystals as a result of thermal stress occurring in the manufacturing process. Furthermore, the value of this birefringence is at least about 5 mn/cm, and may commonly reach 10 nm/cm or greater in fluoride crystals with a diameter of $\phi$) 100 mm or greater.

Accordingly, even if an attempt is made to minimize the aberration of an optical system using a fluoride crystal (single crystal), the birefringence of the fluoride crystal arising from the effects of stress is an impediment. As a result, satisfactory optical performance often cannot be obtained in the optical system.

Furthermore, if countenmeasures such as an extreme lengthening of the annealing time in the fluoride crystal manufacturing process, etc., are adopted in order to reduce the birefringence of fluoride crystals (single crystals) used in optical elements or optical systems, delivery dates are delayed (i, e., the productivity drops), and costs are increased.

In recent years, there has been a rapid development of lithographic techniques for inscribing integrated circuit patterns on wafers. Demand for higher integration of integrated circuits continues to grow. In order to realize such higher integration, it is necessary to increase the resolving power of stepper projection lenses.

The resolving power of a projection lens is governed by the wavelength of the light used and the NA (numerical aperture) of the projection lens. The resolving power can be increased by shortening the wavelength of the light used or increasing the NA (increasing the caliber) of the projection lens.

First, shortening of the wavelength of the light used will be discussed. The wavelengths used in steppers have already advanced to the g line (wavelength: 436 nm) and i line (wavelength: 365 nm). In the future, when even shorter-wavetength KrF excimer laser light (wavelength: 248 nm) and ArF excimer laser light (wavelength: 193 nm), etc., come into use, the use of optical glass in optical systems will become virtually impossible from the standpoint of transmittance.

Accordingly, synthetic silica glass or calcium fluoride is commonly used as an optical element material in the optical systems of excimer laser steppers.

Next, increasing the caliber of such elements will be discussed. Here, it is not simply a question of better results with a larger caliber. In regard to the materials of optical elements used in the optical systems of excimer laser steppers, it is necessary that single crystals be used in the case of calcium fluoride.

Furthermore, as the performance of steppers has improved, there has recently been a demand for large-caliber calcium fluoride single crystals with a caliber of around $\phi$ 120 mm to $\phi$ 250 mm. Such calcium fluoride single crystals have a low refractive index compared to ordinary optical glass, and also show little dispersion (wavelength dependence of the refractive index). Accordingly, such materials are extremely effective in the correction of color aberration, Furthermore, such materials can easily be obtained in the marketplace, with large-caliber single crystals having a diameter of $\phi$ 120 mm or greater also being obtainable.

Calcium fluoride single crystals which have such advantages have long been used as lens materials in cameras, microscopy and telescopes in addition to being used as optical materials in steppers.

Furthermore, single crystals of barium fluoride and strontium fluoride, which are fluoride single crystals other than calcium fluoride single crystals, belong to the same cubic crystal type, and have similar properties; accordingly, the uses of these crystals are also similar to those of calcium fluoride single crystals.

Such fluoride single crystals can be manufactured by a method known as the Bridgeman method, the Stockberger method, or the "pull-down" method.

Here, a method for manufacturing calcium fluoride single crystals by the Bridgeman method (one example) will be described.

In the case of calcium fluoride single crystals used in the ultraviolet or vacuum ultraviolet region, natural fluorite is not used as a raw materials; instead, the general practice is to use high-purity raw materials manufactured by chemical synthesis.

The raw materials can be used "as is" in a powdered state. In such a case, however, the volume decrease upon melting is severe. Ordinarily, therefore, semi-molten raw materials or pulverized products of the same are used.

First, a crucible filled with the above-mentioned raw material is placed in a growth apparatus, and the interior of the growth apparatus is maintained at a vacuum of $10^{-3}$ to $10^{-4}$Pa.

Next, the temperature inside the growth apparatus is elevated to a temperature above the melting point of calcium fluoride (1370°C to 1450°C) so that the raw material is melted. In this case, control by means of a constant power output or high-precision PID control is performed in order to suppress fluctuations in the temperature inside the growth apparatus over tine.

In the crystal growth stage, the crucible is lowered at a speed of approximately 0.1 to 5 mm/h, so that crystallization is gradually caused to occur from the lower part of the crucible.

When crystallization has occurred up to the upper portion of the melt, crystal growth is completed, and a simple gradual cooling process is performed, with sudden cooling being avoided so that the grown crystal (ingot) does not crack. When the temperature inside the growth apparatus has dropped to room temperature, the apparatus is opened to the atmosphere, and the ingot is removed.

Ordinarily, a graphite crucible is used in this crystal growth, and a pencil-shaped ingot with a conical tip is manufactured. In this case, a single crystal can be formed by growing the crystal from the area of the tip end of the conical part positioned at the lower end of the crucible.

Furthermore, if necessary, there is also a technique in which the direction of crystal growth is controlled by placing a seed crystal in the above-mentioned tip end portion; however, if the diameter of the ingot exceeds $\phi$ 120 mm, control of the orientation of crystal growth becomes extremely difficult.

Generally, in cases where a fluoride single crystal is manufactured by the Bridgeman method, it is considered that there is no preference in the direction of growth, so that the horizontal plane of the ingot is a random plane in each crystal growth process.

Since there are extremely large amounts of residual stress and strain in the ingot removed from the crucible, the ingot is subjected to a simple heat treatment "as is",

The fluorite single crystal ingot thus obtained is cut to an appropriate size according to the desired product. Here, the ingot is naturally cut horizontally (annular cut) in order to cut out a material for manufacturing a larger optical element (lens, etc.) from the ingot in accordance with the desired product. Then, the material thus cut out is subjected to a heat treatment in order to improve the quality of the material.

"193-nm lithographic system lifetimes as limited by UV compaction" (William G. Oldham et al, Solid State Technology, Cowan publ.corp., Washinton, US, vol. 40, no. 4, 1 April 1997, pages 95-96, 98,100,102, ISSN:0038-111X) discloses lithography tools operating with 193-nm UV light (ArF excimer laser) to print device features with resolutions of ≤0.18 um.

US 5 031 977 A discloses that a deep ultraviolet (UV) lens for use in a photolithography system provides enhanced resolution by using shorter wavelengths of light exposure (in the ultraviolet wavelength).

"Photoelastic effects in Nd:YAG rod and slab lasers"(Y. Lü, U. Wittstock, S.Dong, Optics & Laser Technology 27(2), 95-101) discloses an analysis of the thermally induced stress birefringence in YAG rods and slabs.

SUMMARY OF THE INVENTION

In view of the above circumstances, an object of the present invention is to provide a method for calculating the birefringence of an optical element and a method for determining the birefringence of an optical element that make it possible to select the direction of minimum birefringence in the optical element. A further object is to provide an optical element that has little birefringence. Yet another object of the invention is to provide a method of manufacturing the material used to make an optical element with reduced birefringence. Another object is to provide an optical system in which the aberration of the optical devices is small.

To achieve the objects and in accordance with the purpose of the invention, as embodied and broadly described herein, the invention provides the method according to claim 1. Further embodiments of the invention are described in the dependent claims.

**BRIEF DESCRIPTION OF THE DRAWINGS**

Fig. 1 is a schematic diagram which shows the conditions under which the material for manufacturing optical elements obtained from an ingot is heat-treated.

Fig. 2 is a schematic diagram which illustrates the acquisition of the material for manufacturing optical elements from an ingot.

Fig. 3 is a conceptual diagram which shows coincidence (or substantial coincidence) of the direction of the optical axis of an optical system with the direction of the <111> axis of the fluoride crystal.

Fig. 4 is a conceptual diagram which shows the conditions of the coordinate conversion used in order to orient the x3 axis in a three-dimensional (x1; [100] axis, x2: [010] axis, x3: [001] axis) orthogonal coordinate system in the direction of the [111] axis.

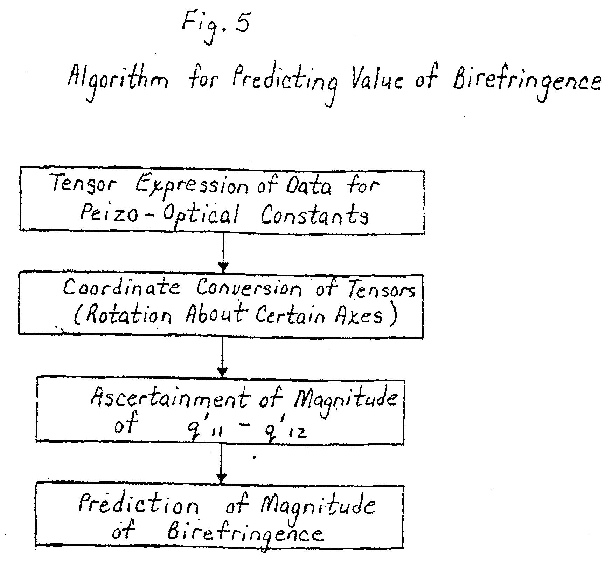

Fig. 5 is a flowchart of an algorithm used to predict the magnitude of birefringence.

**DESCRIPTION OF THE PREFERRED EMBODIMENT**

Reference will now be made in detail to the present exemplary embodiment) of the invention. Crystals with cubic crystal symmetry such as fluoride crystals (single crystals) are generally optically isotropic bodies when not under stress, so that the refractive index is inherently the same for light passing through from all directions relative to the crystal axis. But the mechanical properties of such crystals show an anisotropy and a differing amount of light displacement under the same stress depending on the direction the light passes through the crystal.

The material for manufacturing optical elements ($\phi$ 180 $\times$ t 50 cylindrical shape) in accordance with an aspect of the present embodiment consists of a calcium fluoride single crystal. This material has {111} crystal planes as two parallel planes, and has a birefringence of 1 nm/cm or less.

Furthermore, the material for manufacturing optical elements in accordance with the present embodiment is obtained by cutting the material for manufacturing optical elements from a calcium fluoride single crystal ingot obtained by crystal growth, or from a calcium fluoride single crystal ingot obtained by crystal growth and further subjected to a heat treatment, so that {111} crystal planes are two parallel planes, and then subjecting this material to a heat treatment.

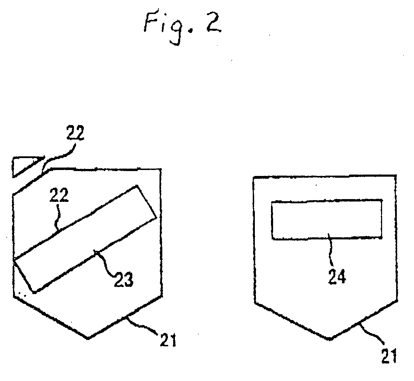

Referring to Fig. 2, one piece of material 23 for manufacturing optical elements involved in the present embodiment is cut from the ingot 21 with {111} crystal planes 22 being two parallel planes. Two material samples 24 with random surfaces in which the cut surfaces were not {111} crystal planes were also cut out of another ingot 21 for purposes of comparison (Fig. 2).

The birefringence values of the respective cut-out materials 23 and 24 were obtained by performing automatic measurements at approximately 200 points using an automatic birefringence measuring apparatus such as that manufactured by ORC MANUFACTURING CO., LTD.

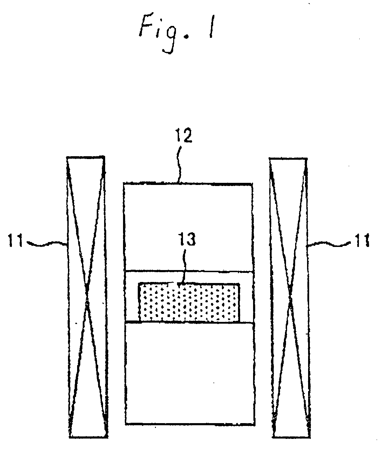

Next, the respective materials 23 and 24, shown at 13 in Fig. 1, were placed inside the vessel 12 of the heat treatment apparatus so that the planes of the materials were horizontal as shown in Fig. 1, and a heat treatment (annealing, heat treatment temperature; 1050°C) was performed using the heating of a heater 11. Afterward, the birefringence values were again automatically measured in the same way.

As a result, maximum values of birefringence were obtained as shown in Table 1 before and after the heat treatment. It is seen from the measurement results in Table 1 that the birefringence values of the material 23 of the present embodiment, in which the cut surfaces were {111} planes, were much smaller than those of the random-plane materials 24 in which the cut surfaces were not {111} planes.

Table 1. Change in birefringence of calcium fluoride crystal described in Embodiment 1. Units: (nm/cm).

| Plane orientation | {111} | Random (1) | Random (2) |
|---|---|---|---|
| Birefringence before heat treatment | 12.4 | 11.8 | 9.2 |
| Birefringence after heat treatment | 0.8 | 3.2 | 4.9 |

Thus, by using the manufacturing method of the present embodiment, it is possible to obtain a material for manufacturing optical elements which consists of a calcium fluoride single crystal in which the birefringence value is reduced compared to conventional materials. In concrete terms, it was possible to obtain a material for manufacturing optical elements in which the birefringence was reduced to a value of 1 nm/cm or less.

Furthermore, in a case where a stepper projection lens was manufactured from a material consisting of a calcium fluoride single crystal obtained by the manufacturing method of the present embodiment, and an attempt was made to minimize the aberration of an optical system using this projection lens, the birefringence of the material was not a problem as in conventional methods. It was therefore possible to increase the number of projection lenses that could be used in the above-mentioned optical system (the number of projection lenses that could be manufactured from the material). Furthermore, it was possible to realize projection lenses with a superior optical performance.

In a second embodiment according to the invention, the material for manufacturing optical elements ($\phi$ 180 $\times$ t 50 cylindrical shape) consists of a barium fluoride single crystal. This material has {111} crystal planes as two parallel planes, and has a birefringence of 2 nm/cm or less.

Furthermore, the material for manufacturing optical elements involved in the second embodiment is obtained by cutting the material for manufacturing optical elements from a barium fluoride single crystal ingot obtained by crystal growth, or from a barium fluoride single crystal ingot obtained by crystal growth and further subjected to a heat treatment, so that {111} crystal planes are two parallel planes, and then subjecting this material to a heat treatment.

Similarly to the first embodiment, besides cutting out one material 23 for manufacturing optical elements involved in the present embodiment from the ingot 21 with {111} crystal planes 22 being two parallel planes, two material samples 24 with random surfaces in which the out surfaces were not {111} crystal planes were cut out for purposes of comparison (Figure 2).

Here, the birefringence values of the respective cut-out materials 23 and 24 were obtained by performing automatic measurements at approximately 200 points using an automatic birefringence measuring apparatus manufactured by ORC MANUFACTURING CO., LTD.

Next, the respective materials 23 and 24, as shown at 13 in Fig. 1, were placed inside the vessel 12 of the heat treatment apparatus so that the planes of the materials were horizontal as shown in Figure 1, and a heat treatment (annealing, heat treatment temperature: 900°C) was performed using the heating of a heater 11. Afterward, the birefringence values were again automatically measured in the same way.

As a result, maximum values of birefringence were obtained as shown in Table 2 before and after the heat treatment. It is seen from the measurement results in Table 2 that the birefringence values of the material 23 of the second embodiment, in which the cut surfaces were along {111} planes, were much smaller than those of the random-plane materials 24 of the second embodiment in which the cut surfaces were not along {111} planes.

Table 2. Change in birefringence of barium fluoride crystal described in Embodiment 2. Units. (nm/cm).

| Plane orientation | {111} | Random (1) | Random (2) |
|---|---|---|---|
| Birefringence before heat treatment | 14.4 | 10.9 | 11.6 |
| Birefringence after heat treatment | 1.9 | 6.4 | 7.1 |

Thus, by using the manufacturing method of the second embodiment, it is possible to obtain a material for manufacturing optical elements which consists of a barium fluoride single crystal in which the birefringence value is reduced compared to conventional materials. In concrete terms, it was possible to obtain a material for manufacturing optical elements in which the birefringence was reduced to a value of 2 nm/cm or less.

Furthermore, in a case where a stepper projection lens was manufactured from a material consisting of a barium fluoride single crystal obtained by the manufacturing method of the second embodiment, and an attempt was made to minimize the aberration of an optical system using this projection lens, the birefringence of the material was not a problem as in conventional methods, and it was possible to increase the number of projection lenses that could be used in the above-mentioned optical system (the number ofprojection lenses that could be manufactured from the material). Furthermore, it was possible to realize projection lenses with a superior optical performance.

The following Equation (1) is an equation which expresses the refractive index ellipsoid of an object (e.g., an optical member such as an optical element or a material for the manufacture of optical elements, etc.) consisting of a fluoride single crystal.

$$Bij\ xi\ xj = 1\ (i, j = 1, 2, 3) \qquad (1)$$

Here, x1, x2 and x3 are coordinate axes which are respectively perpendicular to each other (i. e., the respective coordinate axes of a three-dimensional orthogonal coordinate system).

The coefficient Bij in Equation (1) varies according to the stress applied to the object; accordingly, the refractive index also varies. This amount of variation $\Delta$ Bij is determined by the stress ok1 and tensors known as piezo-optical constants (piezo-optical coefficients: qijkl, see Equation (2)). Furthermore, for convenience of notation, Equation (2) is expressed as shown by Equation (3), with ijkl $\rightarrow$ ij.

$$\Delta Bij = qijkl\ \sigma kl \qquad (2)$$

$$\Delta Bi = qij\ \sigma j \qquad (3)$$

Furthermore, it is also possible to express this using strain tensors $\epsilon$kl instead of stress tensors (see Equation (4)). Here, pijkl are referred to as clasto-optical constants (elasto-optical coefficient).

$$\Delta Bij = pijkl\ \epsilon kl \qquad (4)$$

The piezo-optical constants of calcium fluoride ($CaF_2$), barium fluoride ($BaF_2$) and strontium fluoride ($SrF_2$) for several wavelengths are listed in NBS TECHNICAL NOTE 993 (1978).

Since the coordinate axes of these constants are taken on the axes of the crystal lattice, x1 may be taken on the [100] axis, x2 may be taken on the [010] axis, and x3 maybe taken on the [001] axis (for example). Accordingly, if the above-mentioned piezo-optical constants and stress tensors are input into Equation (3), the amount of deformation of the refractive index ellipsoid can be calculated.

Specifically, if the measurement direction (direction of observation or light path) is determined, then the amount of birefringence is determined.

For example, assuming that the stress p applied to the object is a uniaxial stress along the [100] axis, then the stress tensors are as follows:

$\sigma 1 = p$, $\sigma_2 = \sigma_3 = \sigma_4 = \sigma_5 = \sigma_6 = 0$
$\Delta B1 = q_{11}\ p$, $\Delta B2 = q_{12}\ p$, $\Delta B3 = q_{13}\ p$, .....

Because of their symmetry, the piezo-optical constants of an equiaxial crystal system can be expressed as three constants; here, $q_{11}$, $q_{12}$ and $q_{44}$ are different constants. If these are written in tensor form, then the following equation is obtained:

Numerical Expression 1:

$$q_{ij} = \begin{bmatrix} q_{11} & q_{12} & q_{12} & 0 & 0 & 0 \\ q_{12} & q_{11} & q_{12} & 0 & 0 & 0 \\ q_{12} & q_{12} & q_{11} & 0 & 0 & 0 \\ 0 & 0 & 0 & q_{44} & 0 & 0 \\ 0 & 0 & 0 & 0 & q_{44} & 0 \\ 0 & 0 & 0 & 0 & 0 & q_{44} \end{bmatrix}$$

Here, assuming that the measurement direction is the direction of the [001] axis, the birefringence is as follows:

$$\Delta n// - \Delta n = 1/\sqrt{(\Delta B1)} - 1/\sqrt{(\Delta B2)}$$

$$= -(1/2)n^3(q_{11} - q_{12})p \qquad (5)$$

In Equation (5), $\Delta n//$ is the amount of variation in the refractive index with respect to light polarized in the direction of stress, and $\Delta n$ is the amount of variation in the refractive index with respect to light polarized in the direction perpendicular to the direction of stress.

Equation (5) indicates that a larger birefringence will be generated under the same stress conditions in a substance (object) which has a larger coefficient ($q_{11} - q_{12}$).

If piezo-optical constants are copied from NBS TECHNICAL NOTE 993, the values obtained at a wavelength of 637.8 nm are as shown in Table 1.

Table 1. Piezo-optical constants.

|  | CaF$_2$ | SrF$_2$ | BaF$_2$ | |
|---|---|---|---|---|
| $q_{11}$ | -0.38 | -0.64 | -0.99 | |
| $q_{12}$ | 1.08 | 1.45 | 2.07 | |
| $q_{11} - q_{12}$ | -1.46 | -2.08 | -3.06 | |
| $q_{44}$ | 0.71 | 0.60 | 0.95 | (1E-12Pa^-I) |

In this way, using the tensors of the uniaxial stress p applied to the optical element material along one coordinate axis (x 1: [100] axis) of a three-dimensional (x1 : [100] axis, x2: [010] axis, x3: [001] axis) orthogonal coordinate system, and the tensors of the above-mentioned known piezo-opticad constants (in a specified three-dimensional orthogonal coordinate system x1, x2, x3), the amount of change in the refractive index $\Delta n1$ in the direction of the above-mentioned coordinate axis (first direction, direction of the [100] axis) and the amount of change in the refractive index $\Delta n2$ in a second direction (direction of the [010] axis) perpendicular to the direction of the above-mentioned coordinate axis are calculated, and the amount of birefringence seen from a third direction ([001] axis) which is perpendicular to the above-mentioned first and second directions is determined by determining the difference between the amount of change in the refractive index $\Delta n1$ and amount of change in the refractive index $\Delta n2$.

In an ordinary disk-shaped optical member (e. g., an optical element or material used for the manufacture of optical elements), cases are commonly encountered in which the optical axis of the optical system is oriented in the direction of the center axis of the disk, and the direction of stress is oriented toward the center of the disk perpendicular to the above-mentioned direction (or from the center toward the outside; this direction is ordinarily taken as positive, so that the sign of tensile stress is positive).

In order to calculate the birefringence for such a disk-shaped optical member in a case where stress is applied in an arbitrary direction, it is necessary to subject the above-mentioned known piezo-optical constants to a coordinate conversion.

Specifically, the above-mentioned knows piezo-optical constants are optical constants in a specified three-dimensional (x1: [100] axis, x2: [010] axis, x3: [001] axis) orthogonal coordinate system, and are values for a case in which the coordinate axes are taken along the axes of the crystal lattice. The piezo-optical constants in an arbitrary three-dimensional orthogonal coordinate system corresponding to the arbitrary directions in which the above-mentioned stress is applied must be determined by subjecting the above-mentioned known piezo-optical constants to a coordinate conversion.

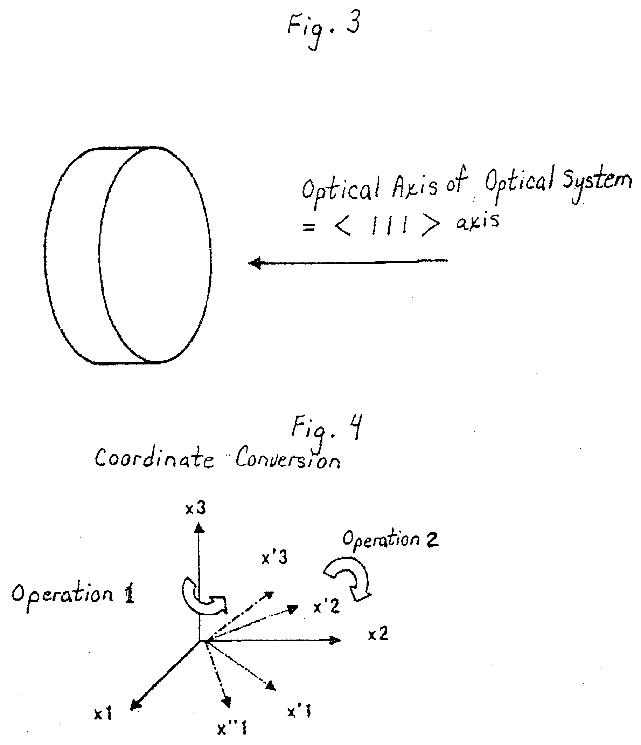

Furthermore, using the uniaxial stress that is applied to the above-mentioned optical member along the direction of one coordinate axis of the above-mentioned arbitrary three-dimensional orthogonal coordinate system (first direction), and the piezo-optical constants in the above-mentioned arbitrary three-dimensional coordinate system, the amount of change in the refractive index $\Delta n1$ in the directions of one coordinate axis of the above-mentioned arbitrary three-dimensional orthogonal coordinate system (first direction), and the amount of change in the refractive index $\Delta n2$ in a second direction which is perpendicular to the direction of the above-mentioned coordinate axis, are calculated, and the amount of birefringence seen from a third direction perpendicular to the above-mentioned first and second directions can be determined in the above-mentioned arbitrary three-dimensional orthogonal coordinate system by determining the difference between the above-mentioned amounts (see Figure 3).

As a result of the calculation of the respective birefringence values when the direction in which uniaxial stress is applied is taken to be an arbitrary direction, i. e., the respective birefringence values in an arbitrary three-dimensional orthogonal coordinate system, the birefringence measured from the direction of the <111> axis of the fluoride crystal constituting the optical member is determined to be the smallest.

The piezo-optical constants in a coordinate system in which the x3' axis of a three-dimensional (x1" axis, x2' axis, x3' axis) orthogonal coordinate system is oriented in the direction of the <111> axis were determined by subjecting the above-mentioned known piezo-optical constants to a coordinate conversion so that the x3 axis is oriented in the direction of the <111> axis.

Furthermore, the coordinate conversion of the piezo-optical constants can be accomplished by converting the respective components of the tensors in accordance with Equation (6) shown below. In order to accomplish this coordinate conversion, it is sufficient to perform rotations about the coordinate axes.

Numerical Expression 2:

$$q'_{ijkl} = a_{im}\, a_{jn}\, a_{ko}\, a_{lp}\, q_{mnop} \qquad (6)$$

$$a_{ij} = \begin{bmatrix} \cos(A) & \sin(A) & 0 \\ -\sin(A) & \cos(A) & 0 \\ 0 & 0 & 1 \end{bmatrix}$$

In the above equation, is a tensor which performs the coordinate conversion, and indicates a case of rotation about the x3 axis by A radians in the counterclockwise direction.

For example, in order to orient the x3 axis in a three-dimensional (x1 : [100] axis, x2: [010] axis, x3: [001] axis) orthogonal coordinate system in the direction of the [111] axis, it is sufficient first to cause a rotation of 45 degrees (in the counterclockwise direction) about the x3 axis, and then to cause a rotation of arctan ($\sqrt{2}$) in the clockwise direction about the x2' axis (Figure 2).

Furthermore, in order to orient the x3 axis in a three-dimensional (x1: [100] axis, x2: [010] axis, x3: [001] axis) orthogonal coordinate system in the direction of the [100] axis, it is sufficient to cause a rotation of 45 degrees (in the counterclockwise direction) about the x2 axis.

Furthermore, in order to orient the x3 axis in a three-dimensional (x1: [100] axis, x2: [010] axis, x3: [001] axis) orthogonal coordinate system in the direction of the [110] axis, it is sufficient first to cause a rotation of 90 degrees (in the counterclockwise direction) about the x2 axis, and then to cause a rotation of 45 degrees (in the counterclockwise direction) about the x3 axis.

Here, a coordinate conversion for the purpose of orienting the x3 axis in a three-dimensional (x1: [100] axis, x2: [010] axis, x3: [001] axis) orthogonal coordinate system in the direction of the [111] axis will be performed, and the birefringence in a case where a stress p is applied from the direction of the x1" axis in the convened coordinate system (x1" axis, x2' axis, x3' axis) will be determined. The piezo-optical constant tensor $q'y$ in this case is expressed by the following equation:

Numerical Expression 3:

$$q'_{ij} = \begin{bmatrix} q'_{11} & q'_{12} & q'_{13} & 0 & q_{15} & 0 \\ q'_{12} & q'_{11} & q'_{13} & 0 & -q_{15} & 0 \\ q'_{13} & q'_{13} & q'_{33} & 0 & 0 & 0 \\ 0 & 0 & 0 & q'_{44} & 0 & 0 \\ q'_{15} & -q'_{15} & 0 & 0 & q'_{44} & 0 \\ 0 & 0 & 0 & 0 & 0 & q'_{66} \end{bmatrix}$$

Furthermore, $q'_{ij}$ calculated from the values in NBS TECHNICAL NOTE 993 is as shown in Table 2.

Table 2

Coordinate-converted piezo-optical constants.

|  | CaF$_2$ | SrF$_2$ | BaF$_2$ |
| --- | --- | --- | --- |
| q'$_{11}$ | 0.705 | 0.705 | 1.015 |
| q'$_{33}$ | 0.357 | 1.153 | 1.683 |
| q'$_{12}$ | 0.718 | 1.002 | 1.402 |
| q'$_{13}$ | 0.357 | 0.553 | 0.733 |
| q'$_{15}$ | -1.023 | -1.268 | -1.890 |
| q'$_{44}$ | -0.737 | -1.193 | -1.723 |
| q'$_{66}$ | -0.0133 | -0.297 | -0.387 |
| (q'$_{11}$-q'$_{12}$) | -0.0133 | -0.297 | -0.387) |

If the birefringence in a case where a uniaxial stress σ', is applied (σ' 1 =p, σ' 2 = σ' 3 ... = 0) is calculated using these values, then we obtain the following;

$$\Delta n // - \Delta n = -(1/2)n^3(q'_{11} - q'_{12})p \qquad (7)$$

Since the value of q'$_{11}$ - q'$_{12}$ = q'$_{66}$ is the smallest of all the coefficients, it is seen that the birefringence realizes a minimum value.

Specifically, it is seen from the calculated values in Table 2 that the birefringence in the direction of the <111> axis is smallest in calcium fluoride, strontium fluoride and barium fluoride.

In particular, the birefringence in the direction of the <111> axis in calcium fluoride is extremely small, and is smaller than the values seen in strontium fluoride and barium fluoride by about an order of magnitude.

Thus, in the present embodiment, it was possible to select the direction of minimum birefringence in the material of an optical member.

Furthermore, in the present embodiment, by selecting the direction of minimum birefringence in an optical member, it was possible to form an optical element with a small birefringence (in which the direction of the optical axis was set so that the birefringence showed a minimum value), or to manufacture an optical element with such a small birefringence from a material used for the manufacture of optical elements.

For example, in the present embodiment, an optical element was manufactured by finding the direction of observation in which the birefringence showed a minimum value (third direction) for the above-mentioned optical element material from the amounts of birefringence respectively determined in the above-mentioned arbitrary three-dimensional orthogonal coordinate system, and working the above-mentioned optical element material so that the direction of observation in which the birefringence showed a minimum value (i. e., the direction of the <111> axis of the fluoride crystal) coincided (or substantially coincided) with the direction of the optical axis.

Here, reference to a direction which coincides (or substantially coincides) means that there is preferably a coincidence to within approximately 5 degrees in terms of angular deviation.

Furthermore, calcium fluoride, strontium fluoride and barium fluoride all have the property of cleaving along the (111) plane. The present invention is also very advantageous in terms of working, in that a material with a small birefringence can be created by working the material in parallel with this cleavage plane.

Furthermore, in the present embodiment, disk-form bodies with dimensions of φ 150 x 20 were cut from respective blocks of calcium fluoride, strontium fluoride and barium fluoride, and were used as optical elements or precursors of optical elements (materials for manufacturing optical elements). Furthermore, the respective birefringence values were measured for three cases in which the φ 150 center axis was [100], [110] or [111] (Table 3). Moreover, the above-mentioned blocks were manufactured by substantially comparable crystal growth and heat treatment.

Birefringence refers to the maximum birefringence value obtained when the surface of the optical element or precursor was polished, and measurements were made at approximately 100 points across an effective diameter of φ 140 using an automatic measuring device such as that manufactured by ORC MANUFACTURING CO., LTD. Furthermore, values in parentheses are average values.

Moreover, lenses with a curvature can be obtained by working the above-mentioned precursor into the shape of a lens; in this case, it goes without saying that working is performed so that the direction of the <111> axis of the precursor coincides (or substantially coincides) with the direction of the optical axis.

Table 3. Measured values of birefringence for three types of fluoride crystals.

| Axial orientation | Plane orientation | $CaF_2$ | $SrF_2$ | $BaF_2$ | |
|---|---|---|---|---|---|
| [100] | (100) | 5.4 (3.8) | 8.4 (5.5) | 10.2 (5.8) | |
| [110] | (110) | 6.8 (3.5) | 7.3 (4.9) | 9.1 (5.2) | |
| [111] | (111) | 1.1 (0.4) | 2.5 (1.0) | 2.9 (1.3) | [nm/cm] |

Thus, in the present embodiment, it was possible to obtain an optical element with a small birefringence (i.e. with the direction of the optical axis set so that the birefringence showed a minimum value), in which the direction of the optical axis either coincided (or substantially coincided) with the <111> axial direction of the fluoride crystal, or coincided (or substantially coincided) with, a direction perpendicular to the {111} plane of the fluoride crystal.

In the present embodiment, the amounts of birefringence are determined in an arbitrary three-dimensional orthogonal coordinate system using the uniaxial stress (tensor) applied to the optical member and the piezo-optical constants (tensors) in the arbitrary three-dimensional coordinate system. However, these could also be determined using the strain (tensor) corresponding to the above-mentioned uniaxial stress and the clasto-optical constants (tensors) in the arbitrary three-dimensional coordinate system.

**Claims**

1. A method for manufacturing a fluoride crystal optical element comprising at least:

   providing a fluoride crystal having piezo-optical constants in a specified three-dimensional orthogonal coordinate system;

   converting the piezo-optical constants in the specified three-dimensional orthogonal coordinate system into piezo-optical constants in an arbitrary three-dimensional orthogonal coordinate system;

   calculating $\Delta n1$ and $\Delta n2$ which respectively are the amount of change in the refractive index of the fluoride crystal in a first direction along the direction of one coordinate axis of the arbitrary three-dimensional orthogonal coordinate system and the amount of change in the refractive index of the fluoride crystal in a second direction which is perpendicular to the first direction by using a uniaxial stress that is applied to the fluoride crystal along the first direction and said piezo-optical constants in the arbitrary three-dimensional coordinate system;

   determining the difference between the amount of change in the refractive index $\Delta n1$ and the amount of change in the refractive index $\Delta n2$ to determine the amount of birefringence with respect to a third direction perpendicular to the first direction and the second direction;

   determining the direction of observation showing a minimum birefringence for the fluoride crystal from the amounts of birefringence respectively determined in the arbitrary three-dimensional orthogonal coordinate system; and

   forming the fluoride crystal optical element by processing the fluoride crystal so that the direction of observation showing a minimum birefringence is caused to substantially coincide with the direction of the optical axis of the fluoride crystal optical element.

2. The method according to claim 1, wherein the fluoride crystal is selected from the group consisting of calcium fluoride, strontium fluoride and barium fluoride.

3. The method according to claim 2, wherein the direction of observation showing a minimum birefringence substantially coincides with the <111> axial direction of the fluoride crystal, or substantially coincides with a direction perpendicular to the {111} plane of the fluoride crystal.

4. The method according to claim 1, wherein the fluoride crystal is cut from a fluoride single crystal ingot obtained by crystal growth so that the {111} crystal planes are two parallel planes, after which the optical performance is improved by subjecting the crystal to a heat treatment.

5. The method according to claim 4, wherein the birefringence of the crystal is reduced from a value of 5 nm/cm or greater to a value of 3 nm/cm or less by means of the above-mentioned heat treatment.

## Patentansprüche

1. Verfahren zum Herstellen eines optischen Elementes aus einem Fluoridkristall, zumindest aufweisend:

   Bereitstellen eines Fluoridkristalls, welcher piezo-optische Konstanten in einem vorgegebenen, dreidimensionalen, orthogonalen Koordinatensystem hat,

   Umwandeln der piezo-optischen Konstanten in dem vorgegebenen, dreidimensionalen, orthogonalen Koordinatensystem in piezo-optische Konstanten in einem frei wählbaren, dreidimensionalen, orthogonalen Koordinatensystem,

   Berechnen von $\Delta n1$ und $\Delta n2$, die jeweils der Änderungsbetrag in dem Brechungsindex des Fluoridkristalls in einer ersten Richtung entlang der Richtung einer Koordinatenachse des frei wählbaren, dreidimensionalen, orthogonalen Koordinatensystems und der Änderungsbetrag in dem Brechungsindex des Fluoridkristalls in einer zweiten Richtung, die senkrecht zu der ersten Richtung ist, sind, unter Verwerdung einer einachsigen Belastung, die auf den Fluoridkristall entlang der ersten Richtung ausgeübt wird, und der piezo-optischen Konstanten in dem frei-wählbaren, dreidimensionalen, orthogonalen Koordinatensystem,

   Ermitteln der Differenz zwischen dem Änderungsbetrag in dem Brechungsindex $\Delta n1$ und dem Änderungsbetrag in dem Brechungsindex $\Delta n2$ zum Ermitteln des Doppelbrechungsbetrags in Bezug auf eine dritte Richtung, die senkrecht zu der ersten Richtung und der zweiten Richtung ist,

   Ermitteln der Observationsrichturrg, welche eine minimale Doppelbrechung für den Fluoridkristall zeigt, aus den Doppelbrechungsbeträgen, die in dem frei-wählbaren, dreidimensionalen, orthogonalen Koordinatensystem ermittelt wurden, und

   Bilden des optischen Elements aus dem Fluoridkristall durch Verarbeiten des Fluoridkristalls, sodass bewirkt wird, dass die Observationsrichtung, die eine minimale Doppelbrechung zeigt, im Wesentlichen mit der Richtung der optischen Achse des optischen Elements aus dem Fluoridkristall übereinstimmt.

2. Verfahren gemäß Anspruch 1, wobei der Fluoridkristall ausgewählt wird aus der Gruppe bestehend aus Kalziumfluorid, Strontiumfluorid und Bariumfluorid.

3. Verfahren gemäß Anspruch 2, wobei die Observationsrichtung, die eine minimale Doppelbrechung zeigt, im Wesentlichen mit der <111> Axialrichtung des Fluoridkristalls übereinstimmt, oder im Wesentlichen mit einer Richtung übereinstimmt, die senkrecht zu der {111} Ebene des Fluoridkristalls ist.

4. Verfahren gemäß Anspruch 1, wobei der Fluoridkristall von einem einzelnen Fluoridkristallingot geschnitten wird, welcher durch Kristallwachstum erhalten wurde, sodass die {111} Kristallebenen zwei parallele Ebenen sind, und danach die optische Leistung dadurch verbessert wird, dass der Kristall einer Wärmebehandlung unterzogen wird.

5. Verfahren gemäß Anspruch 4, wobei die Doppelbrechung des Kristalls mittels der oben erwähnten Wärmebehandlung von einem Wert von 5 nm/ cm oder größer auf einen Wert von 3 nm/ cm oder weniger reduziert wird.

## Revendications

1. Procédé de fabrication d'un élément optique de cristal de fluorure comprenant au moines :

   l'apport d'un cristal de fluorure ayant des constantes piézo-optiques dans un système tridimensionnel spécifié de coordonnées orthogonales ;

   la conversion des constantes piézo-optiques dans le système tridimensionnel spécifié de coordonnées orthogonales en constantes piézo-optiques dans un système tridimensionnel arbitraire de coordonnées orthogonales ;

   le calcul de $\Delta n1$ et $\Delta n2$ qui sont respectivement la quantité de changement de l'indice de réfraction du cristal de fluorure dans une première direction suivant la direction d'un axe de coordonnées du système tridimensionnel arbitraire de coordonnées orthogonales et la quantité de changement de l'indice de réfraction du cristal de fluorure dans une deuxième direction qui est perpendiculaire à la première direction en utilisant une contrainte uniaxiale qui est appliquée sur le cristal de fluorure suivant la première direction et lesdites constantes piézo-optiques dans le système tridimensionnel arbitraire de coordonnées ;

   la détermination de la différence entre la quantité de changement de l'indice de réfraction $\Delta n1$ et la quantité de changement de l'indice de réfraction $\Delta n2$ pour déterminer la quantité de biréfringence par rapport à une troisième direction perpendiculaire à la première direction et à la deuxième direction ;

la détermination de la direction d'observation présentant une biréfringence minimale pour le cristal de fluorure à partir des quantités de biréfringence respectivement déterminées dans le système tridimensionnel arbitraire de coordonnées orthogonales ; et

la formation de l'élément optique de cristal de fluorure en traitant le cristal de fluorure de sorte que la direction d'observation présentant une biréfringence minimale soit amenée à coïncider sensiblement avec la direction de l'axe optique de l'élément optique de cristal de fluorure.

2. Procédé selon la revendication 1, dans lequel le cristal de fluorure est choisi dans le groupe constitué du fluorure de calcium, du fluorure de strontium et du fluorure de baryum.

3. Procédé selon la revendication 2, dans lequel la direction d'observation présentant une biréfringence minimale coïncide sensiblement avec la direction axiale <111> du cristal de fluorure, ou coïncide sensiblement avec une direction perpendiculaire au plan {111} du cristal de fluorure.

4. Procédé selon la revendication 1, dans lequel le cristal de fluorure est découpé à partir d'un lingot monocristallin de fluorure obtenu par croissance des cristaux de sorte que les plans cristallins {111} soient deux plans parallèles, après quoi la performance optique est améliorée en soumettant le cristal à un traitement thermique.

5. Procédé selon la revendication 4, dans lequel la biréfringence du cristal est réduite d'une valeur supérieure ou égale à 5 nm/cm à une valeur inférieure ou égale à 3 nm/cm à l'aide du traitement thermique mentionné ci-dessus.

Fig. 1

Fig. 2

## Fig. 3

Optical Axis of Optical System
= < 1 1 1 > axis

## Fig. 4

### Coordinate Conversion

Operation 1

Operation 2

x3

x'3

x'2

x2

x1

x"1

x'1

Fig. 5

Algorithm for Predicting Value of Birefringence

| Tensor Expression of Data for Peizo-Optical Constants |

| Coordinate Conversion of Tensors (Rotation About Certain Axes) |

| Ascertainment of Magnitude of $q'_{11} - q'_{12}$ |

| Prediction of Magnitude of Birefringence |

**REFERENCES CITED IN THE DESCRIPTION**

**Patent documents cited in the description**

- US 5031977 A

**Non-patent literature cited in the description**

- 193-nm lithographic system lifetimes as limited by UV compaction. **WILLIAM G. OLDHAM et al.** Solid State Technology. Cowan publ.corp, 01 April 1997, vol. 40, 95-96, 98, , 100, , 102

- **Y. LÜ ; U. WITTSTOCK ; S.DONG.** Photoelastic effects in Nd:YAG rod and slab lasers. *Optics & Laser Technology,* vol. 27 (2), 95-101
- *NBS TECHNICAL NOTE,* 1978, vol. 993